# EUROPÄISCHE PATENTANMELDUNG

(11) **EP 1 143 182 A2**
(43) Veröffentlichungstag der Anmeldung: **10.10.2001**
(21) Anmeldenummer: 01102625.9
(22) Anmeldetag: 07.02.2001
(51) Int. Cl.: F16L 19/00, B60T 17/04

(54) **Überwurfschraube und Schraubverbindung zwischen einem Bremsschlauch und einer Bremsleitung**

(30) Priorität: 06.04.2000 DE 10017254
(71) Anmelder: ITT MANUFACTURING ENTERPRISES, INC., Wilmington, Delaware 19801 (US)
(72) Erfinder: Sausner, Andreas, 60529 Frankfurt (DE); Hartmann, Willi, 64560 Riedstadt (DE); Löw, Peter, 01279 Grävenwiesbach (DE)
(74) Vertreter: Dreiss, Fuhlendorf, Steimle & Becker

(57) **Zusammenfassung**

Es werden eine Überwurfschraube (11) und eine Schraubverbindung zwischen einem Bremschlauch (3) und einer Bremsleitung (7) sowie ein Werkzeug zum Anziehen und Lösen der erfindungsgemäßen Überwurfschraube vorgeschlagen.

Die erfindungsgemäße Überwurfschraube erlaubt die Übertragung großer Drehmomente zwischen Überwurfschraube und Werkzeug. Außerdem wird der Platzbedarf bei der Montage verringert.

## Beschreibung

Die Erfindung betrifft eine Überwurfschraube mit einer Mittenbohrung mit einem Außengewinde und mit Mitteln zum Anziehen der Überwurfschraube sowie eine Schraubverbindung zwischen einem Bremsschlauch und einer Bremsleitung mit einer Innengewindearmatur und mit einer Überwurfschraube, wobei die Innengewindearmatur mit einem Bremsschlauch verbunden ist und wobei die Bremsleitung durch eine Mittenbohrung der Überwurfschraube verläuft und an ihrem der Innengewindearmatur zugewandten Ende eine Bördelung aufweist. Außerdem betrifft die Erfindung ein Werkzeug zum Anziehen und Lösen der erfindungsgemäßen Überwurfschraube.

Schraubverbindungen zwischen einem Bremsschlauch und einer Bremsleitung sind in der DIN 74 234 normiert. Diese Verbindung besteht im Wesentlichen aus einer Innengewindearmatur, die mit einem Bremsschlauch verpresst ist und einer Bremsleitung, deren Ende umgebördelt ist. Dabei können Bördelungen nach DIN 74 234 Form E oder Form F verwandt werden. Diese Bördelung wird mit Hilfe einer Überwurfschraube mit Außensechskantkopf in einen Dichtsitz der Innengewindearmatur gepresst und dichtet somit Rohrleitung und Schlauch gegen die Umgebung ab.

Nachteilig an dieser Schraubverbindung ist, dass der überstehende Außensechskantkopf der Überwurfschraube viel Platz erfordert und außerdem die Anzugswerkzeuge (Schraubenschlüssel od.dgl.) sehr viel Platz beanspruchen. Da derartige Schraubverbindungen zwischen Bremsleitung und Bremsschlauch, mindestens bei der Wartung bzw. Reparatur von Bremssystemen in Kraftfahrzeugen, unter nicht ergonomischen Bedingungen, beispielsweise über Kopf, und bei beengten Platzverhältnissen angezogen, bzw. gelöst werden, ist dieser Aspekt wesentlich für die Montage und die Instandhaltung des Bremssystems. Außerdem ist durch die Form des Schraubenkopfs das zwischen Werkzeug und Schraubenkopf übertragbare Drehmoment beschränkt.

Der Erfindung liegt somit die Aufgabe zugrunde, eine Überwurfschraube für eine Schraubverbindung zwischen einem Bremsschlauch und einer Bremsleitung bereitzustellen bzw. eine Schraubverbindung zwischen einem Bremsschlauch und einer Bremsleitung bereitzustellen, bei welchen der Platzbedarf verringert wird, die Montage auch bei beengten räumlichen Verhältnissen erleichtert bzw. erst ermöglicht wird und außerdem hohe Drehmomente zwischen Werkzeug und Überwurfschraube übertragbar sind.

Die eingangs genannte Aufgabe wird erfindungsgemäß gelöst durch eine Überwurfschraube mit einer Mittenbohrung, mit einem Außengewinde und mit Mitteln zum Anziehen der Überwurfschraube, wobei die Mittel zum Anziehen der Überwurfschraube eine koaxial zur Längsachse der Mittenbohrung verlaufende prismatische Ausnehmung sind und wobei die Ausnehmung einen polygonförmigen Querschnitt hat.

Diese Überwurfschraube hat den Vorteil, dass der Durchmesser des Schraubenkopfs kleiner als der Kerndurchmesser des Außengewindes ist und trotzdem hohe Drehmomente übertragen werden können. Dadurch kann der maximale Durchmesser der Überwurfschraube verringert werden. Dies führt in Verbindung mit den ebenfalls verringerten Abmessungen des erforderlichen Werkzeugs zum Anziehen bzw. Lösen der Überwurfschraube insgesamt zu einer deutlichen Reduktion des erforderlichen Bauraums. Außerdem entsteht zwischen der prismatischen Ausnehmung und dem Werkzeug zum Anziehen und Lösen der Überwurfschraube keine Kraft in axialer Richtung, welche das Werkzeug aus der prismatischen Ausnehmung drückt. Schließlich führt die erfindungsgemäße Überwurfschraube zu einer Gewichtsersparnis.

Bei einer Variante der Erfindung ist vorgesehen, dass der Querschnitt der Ausnehmung ein Innen-TORX-Profil ist, so dass die Vorteile dieser Schrauben der Firma CAMCAR, Rockford, Illinois, U. S. A. auch für die erfindungsgemäße Überwurfschraube nutzbar gemacht werden können. Es sind dies vor allem, die Verringerung der Radialkräfte auf den Schraubenkopf, eine weitere Erhöhung des übertragbaren Drehmoments und die verlängerte Standzeit des Werkzeugs zum Anziehen und Lösen der Überwurfschraube.

In Ergänzung der Erfindung ist der Querschnitt der Ausnehmung ein Innensechskant, so dass die Herstellung der Ausnehmung vereinfacht wird.

In weiterer Ergänzung der Erfindung ist vorgesehen, dass die Ecken des polygonförmigen Querschnitts abgerundet sind, so dass die Spannungsspitzen in den Ecken des polygonförmigen Querschnitts verringert werden.

Bei einer anderen Ausgestaltung der Erfindung erstreckt sich das Außengewinde über die gesamte Länge der Überwurfschraube, so dass der Schraubenkopf in den Schaft der Überwurfschraube integriert werden kann und somit Baulänge eingespart wird.

Bei einer Ausführungsform der Erfindung dient die Überwurfschraube zum Verschrauben einer Rohrleitung, insbesondere einer Kraftfahrzeugbremsleitung, mit einer Innengewindearmatur.

Die erfindungsgemäße Aufgabe wird auch gelöst durch eine Schraubverbindung zwischen einem Bremsschlauch und einer Bremsleitung mit einer Innengewindearmatur und mit einer Überwurfschraube, wobei die Innengewindearmatur mit einem Bremsschlauch verbunden ist und wobei die Bremsleitung durch eine Mittenbohrung der Überwurfschraube verläuft und an ihrem der Innengewindearmatur zugewandten Ende eine Bördelung aufweist, wobei die Überwurfschraube mit der Innengewindearmatur verschraubbar ist und wobei die Überwurfschraube eine Überwurfschraube nach einem der Ansprüche 1 bis 6 ist.

Bei dieser Schraubverbindung können die erfindungsgemäßen Vorteile der Überwurfschrauben nach einem der Ansprüche 1 bis 6 in vollem Umfang genutzt werden. Außerdem kann die Bremsleitung und der Bremsschlauch mit Hilfe der erfindungsgemäßen Schraubverbindung bereits beim Hersteller dieser Komponenten vormontiert werden und diese Baugruppe, bestehend aus Bremsschlauch und Bremsrohr, an den Kunden, in der Regel ein Kraftfahrzeughersteller, fertig angeliefert werden. Bei der Montage dieser Baugruppe muss dann nur noch die Überwurfschraube angezogen werden.

Die Lösung der eingangs genannten Aufgabe wird auch ermöglicht, durch ein Werkzeug zum Anziehen einer Überwurfschraube nach einem der Ansprüche 1 bis 6 mit einem Schaft, der an einem Ende ein mit der prismatischen Ausnehmung nach einem der Ansprüche 1 bis 4 zusammenwirkendes Profil aufweist, und wobei der Schaft eine Mittenbohrung aufweist und das Werkzeug in einer Ebene teilbar ist, welche durch die Längsachse des Schafts verläuft.

Mit diesem Werkzeug können die erfindungsgemäßen Überwurfschrauben auch, wenn sie über eine Bremsleitung geschoben wurden, mit großen Drehmomenten angezogen werden, ohne dass die Gefahr von Beschädigungen des Schraubenkopfs besteht.

In Ergänzung der Erfindung greift an dem Schaft mindestens ein Hebel an und schließen die Längsachse des Schafts und die Längsachse des Hebels einen Winkel, insbesondere von 90°, ein, so dass mit geringer Handkraft ein großes Drehmoment auf die erfindungsgemäße Überwurfschraube übertragen werden kann.

Weitere Vorteile der Erfindung sind der Zeichnung, der nachfolgenden Beschreibung und den Patentansprüchen entnehmbar.

Ein Ausführungsbeispiel des Gegenstands der Erfindung ist in der Zeichnung dargestellt und im Folgenden näher beschrieben. Es zeigen:
- Fig. 1:: eine erfindungsgemäße Schraubverbindung im Schnitt;
- Fig. 2:: eine Seitenansicht einer erfindungsgemäßen Schraubverbindung;
- Fig. 3:: eine Schraubverbindung nach dem Stand der Technik mit einem Außensechskantkopf an der Überwurfschraube;
- Fig. 4:: ein Werkzeug zum Anziehen der erfindungsgemäßen Überwurfschraube.

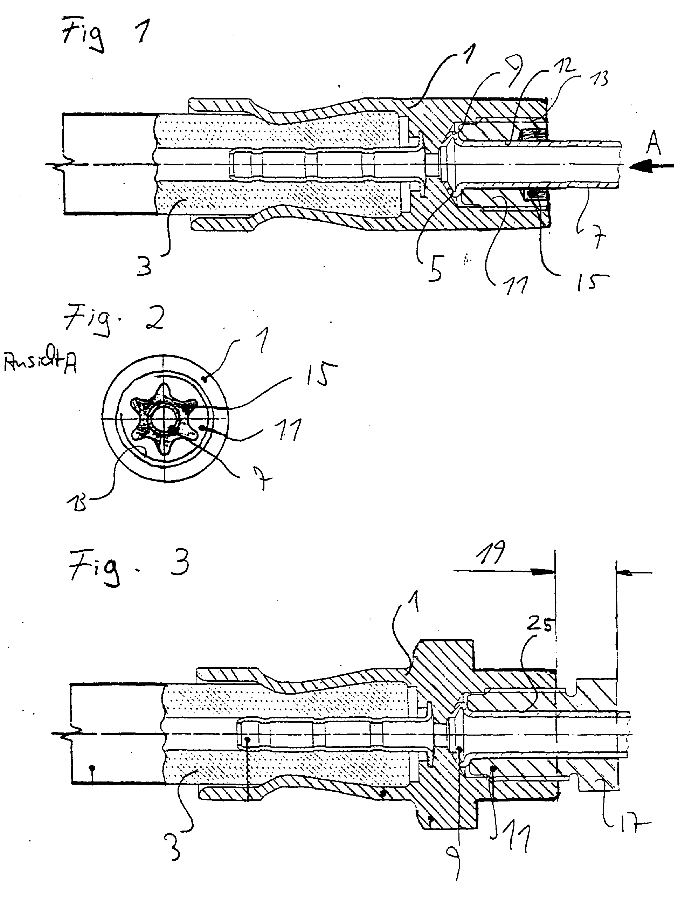

In Fig. 1 ist eine Innengewindearmatur 1 nach dem Stand der Technik dargestellt, die mit einem Bremsschlauch 3 verpresst ist. In einen Dichtsitz 5 ist eine Bremsleitung 7 mit einer Bördelung 9 eingepresst. Die erforderliche Anpresskraft wird durch eine Überwurfschraube 11 mit einer Mittenbohrung 12 aufgebracht. Die Überwurfschraube 11 weist ein Außengewinde auf, welches mit einem entsprechenden Innengewinde der Innengewindearmatur 1 zusammenwirkt. Das erforderliche Anzugsdrehmoment wird über eine polygonförmige Ausnehmung 15 aufgebracht.

In Fig. 2 wird eine Seitenansicht der Schraubverbindung dargestellt. Bei der dargestellten Ausführungsform hat die Ausnehmung 15 den Querschnitt eines TORX-Profils. Dieses TORX-Profil hat den Vorteil, dass auf kleinstem Raum sehr große Drehmomente zwischen Werkzeug und Schraubenkopf übertragen werden können. Außerdem wird beim Anziehen oder Lösen das nicht dargestellte Werkzeug nicht aus der prismatischen Ausnehmung 15 gedrückt und es treten keine Radialkräfte zwischen Ausnehmung 15 und Werkzeug auf.

Aus Fig. 2 ist erkennbar, dass die Abmessungen des TORX-Profils kleiner sind als der Kerndurchmesser des Außengewindes 13. Aus diesem Grund kann die Ausnehmung 15 vollständig in den Schaft der Überwurfschraube integriert werden, so dass die Baulänge der erfindungsgemäßen Überwurfschraube 11 verringert wird. Außerdem führt die Integration der Ausnehmung 15 in den Schaft der Überwurfschraube 11 dazu, dass in eingeschraubtem Zustand das evtl. auftretende Aufweiten der Ausnehmung 15 beim Anziehen der Überwurfschraube 11 verhindert wird. Dies ergibt sich in besonderer Deutlichkeit aus Fig. 1, bei der die Überwurfschraube 11 erkennbar nicht über die Innengewindearmatur 1 hinausragt.

Zum Vergleich ist in Fig. 3 eine Schraubverbindung mit einer Überwurfschraube nach dem Stand der Technik dargestellt. Der Sechskantkopf 17 der Überwurfschraube 11 ragt über die Innengewindearmatur 1 hinaus, so dass die Baulänge der Überwurfschraube 11 nach dem Stand der Technik um etwa den Betrag 19 länger als die erfindungsgemäße Innengewindearmatur ist.

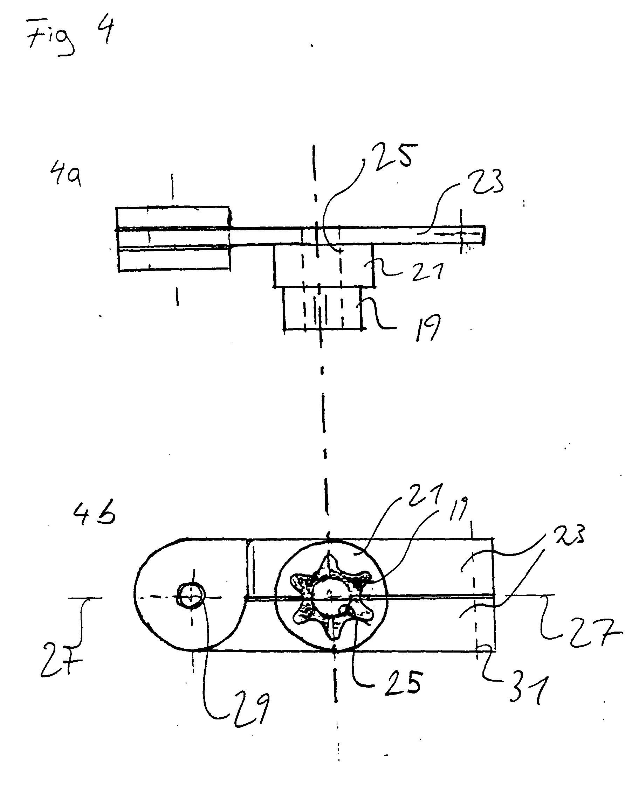

In Fig. 4 ist ein teilbares Werkzeug zum Anziehen der erfindungsgemäßen Überwurfschraube dargestellt. Fig. 4a zeigt eine Seitenansicht des Werkzeugs mit einem Profilstück 19, einem Schaft 21 und einem Hebel 23. Das Profilstück 19 ist so gestaltet, dass es in die Ausnehmung 15 der erfindungsgemäßen Überwurfschraube einführbar ist und ein Drehmoment zwischen Werkzeug und erfindungsgemäßer Überwurfschraube 11 übertragen kann. Das Werkzeug weist außerdem eine Mittenbohrung 12 auf, welche die nicht dargestellte Bremsleitung aufnehmen kann.

Fig. 4b zeigt eine Ansicht des erfindungsgemäßen Werkzeugs von unten. Dabei ist zu erkennen, dass Profilstück 19, Schaft 21 und Hebel 23 entlang einer Teilungsebene 27 teilbar sind, indem sie um einen Drehpunkt 29 geschwenkt werden. In geöffnetem Zustand kann das Werkzeug über die Bremsleitung geschoben werden und anschließend wieder geschlossen werden. Damit sich das Werkzeug beim Anziehen nicht öffnet, sind die beiden Hälften des Hebels 23 durch eine Schraubverbindung 31 gegeneinander verspannt. In diesem Zustand kann die erfindungsgemäße Überwurfschraube mit der Innengewindearmatur verschraubt werden.

Alle in der Beschreibung, den nachfolgenden Ansprüchen und der Zeichnung dargestellten Merkmale können sowohl einzeln als auch in beliebiger Kombination miteinander erfindungswesentlich sein.

## Patentansprüche

1. Überwurfschraube mit einer Mittenbohrung (12), mit einem Außengewinde (13) und mit Mitteln zum Anziehen der Überwurfschraube (11), **dadurch gekennzeichnet, dass** die Mittel zum Anziehen der Überwurfschraube (11) eine koaxial zur Längsachse der Mittenbohrung (12) verlaufende prismatische Ausnehmung (15) sind, und **dass** die Ausnehmung (15) einen polygonförmigen Querschnitt hat.

2. Überwurfschraube nach Anspruch 1, **dadurch gekennzeichnet, dass** der Querschnitt der Ausnehmung (15) ein Innen-TORX-Profil ist.

3. Überwurfschraube nach Anspruch 1, **dadurch gekennzeichnet, dass** der Querschnitt der Ausnehmung (15) ein Innen-Sechskant ist.

4. Überwurfschraube nach einem der vorhergehenden Ansprüche, **dadurch gekennzeichnet, dass** die Ecken des polygonförmigen Querschnitts abgerundet sind.

5. Überwurfschraube nach einem der vorhergehenden Ansprüche, **dadurch gekennzeichnet, dass** sich das Außengewinde (13) über die gesamte Länge der Überwurfschraube (11) erstreckt.

6. Überwurfschraube nach einem der vorhergehenden Ansprüche, **dadurch gekennzeichnet, dass** sie zum Verschrauben einer Rohrleitung (7), insbesondere einer Kraftfahrzeug-Bremsleitung (7), mit einer Innengewinde-Armatur (1) dient.

7. Schraubverbindung zwischen einem Bremsschlauch (3) und einer Bremsleitung (7) mit einer Innengewindearmatur (1) und mit einer Überwurfschraube (11), wobei die Innengewindearmatur (1) mit einem Bremsschlauch (3) verbunden ist und wobei die Bremsleitung (7) durch eine Mittenbohrung (12) der Überwurfschraube (11) verläuft und an ihrem der Innengewindearmatur (1) zugewandten Ende eine Bördelung (9) aufweist, und wobei die Überwurfschraube (11) mit der Innengewindearmatur (1) verschraubbar ist, **dadurch gekennzeichnet, dass** die Überwurfschraube (11) eine Überwurfschraube (11) nach einem der Ansprüche 1 bis 6 ist.

8. Werkzeug zum Anziehen einer Überwurfschraube nach einem der vorhergehenden Ansprüche mit einem Schaft (21), der an einem Ende ein mit der prismatischen Ausnehmung (15) nach einem der Ansprüche 1 bis 5 zusammenwirkendes Profil aufweist, **dadurch gekennzeichnet, dass** der Schaft eine Mittenbohrung (25) aufweist, **dass** das Werkzeug in einer Ebene (27) teilbar ist, und **dass** die Längsachse des Schafts (21) in der Teilungsebene (27) liegt.

9. Werkzeug nach Anspruch 7, **dadurch gekennzeichnet, dass** an dem Schaft (21) mindestens ein Hebel (23) angreift, und **dass** die Längsachse des Schafts (21) und die Längsachse des Hebels (23) einen Winkel, insbesondere von 90°, einschließen.
